Europäisches Patentamt

European Patent Office

Office européen des brevets

(11) Publication number: **0 040 980**
**B1**

# EUROPEAN PATENT SPECIFICATION

(45) Date of publication of patent specification: **21.11.84**

(21) Application number: **81302307.4**

(22) Date of filing: **26.05.81**

(51) Int. Cl.³: **F 01 N 3/28, B 01 J 35/04**

(54) **Catalytic converter.**

(30) Priority: **27.05.80 US 153037**

(43) Date of publication of application:
**02.12.81 Bulletin 81/48**

(45) Publication of the grant of the patent:
**21.11.84 Bulletin 84/47**

(84) Designated Contracting States:
**BE DE FR GB SE**

(56) References cited:
**DE-A-2 211 522**
**DE-A-2 236 592**
**DE-A-2 809 749**
**NL-A-7 614 370**
**US-A- 388 741**
**US-A-4 043 761**
**US-A-4 155 980**

(73) Proprietor: **Corning Glass Works**
**Houghton Park**
**Corning New York 14831 (US)**

(72) Inventor: **Gulati, Suresh Thakordas**
**1001 West Water Street**
**Elmira New York (US)**
Inventor: **Pujari, Vimal Kumar**
**327 West First Street**
**Corning New York (US)**

(74) Representative: **Fentiman, Denis Richard et al**
**Elkington and Fife High Holborn House 52/54**
**High Holborn**
**London WC1V 6SH (GB)**

Courier Press, Leamington Spa, England.

## Description

The present invention relates generally to the field of catalytic converters, and more particularly to the field of catalytic converters comprising containers (cans) containing catalytic substrates surrounded by resilient materials of, for example, wire mesh and ceramic fiber mat.

It has long been known in the art to provide catalytic converters such as catalytic converters for use in treating automotive exhaust gases which generally comprise a metal container or can within which is disposed a porous, honeycomb structured catalytic substrate. Such cans are normally substantially tubular and are adapted to receive exhaust gases at one end and to cause those gases to pass through longitudinal channels formed in substrate gripped therewithin. The then catalytically converted gases are discharged from the remote end of the converter container.

Catalytic converters, particularly automotive catalytic converters, are subject to harsh operating conditions which result in extreme thermal and mechanical stresses. These stresses result from frequent heating and cooling, and exposure of the converter to, for example, canning loads, road shocks and vibration.

It is advantageous to provide catalytic converters having substrates which exhibit high catalytic surface area-to-weight ratio, while nonetheless exhibiting operational durability. In order to meet these needs, relatively light weight, porous ceramic substrates have been developed which are characterized by pluralities of parallel, closely packed longitudinal channels of relatively small dimensions. Cross-sections of such substrates have a honeycomb appearance.

In order to optimize resistance to thermal and mechanical stresses, numerous honeycomb configurations have been suggested for use in ceramic, catalytic substrates. These configurations include structures wherein the channels have generally square, round, triangular, hexagonal, or diamond-shaped cross-sections. Each of these honeycomb configurations exhibits a unique catalytic surface area to unit volume ratio and unique resistances to thermal and/or mechanical stresses. Nonetheless, each configuration may develop failures which include fractures, crushed portions or disintegrated regions. Since such failures may create pathways through the converter of substantially lower fluid frictional resistance, such substrate failures substantially impair the efficiency of the associated converter.

In order to prevent failure of catalytic substrates, and particularly ceramic substrates, it is known to use a flexible mesh support which is disposed around the periphery of the catalytic substrate to protect it from vibrating against hard interior casing surfaces during operation. Such meshes will reduce to some degree thermal and/or mechanical stresses, and help seal the catalytic substrate with respect to the interior of the container so that gas passages are not created between the catalytic substrate and container interior. Additionally, in order to ensure that the catalytic substrate is properly located in and gripped by the container, it is known to size the catalytic substrate-mesh assembly so that uniform interferences will be developed between that assembly and the inner can surface. See, for example, U.S. Patents US—A—3,790,654; US—A—3,912,459; US—A—3,892,537; US—A—4,042,738; and US—A—3,441,381, each of which patents relate to the field of catalytic converters and their container, mesh and substrate assemblies, respectively.

One approach which has been suggested for improving the resistance of a catalytic substrate to thermal shock utilizes a honeycomb ceramic structure consisting of a number of rectangular passages arranged in parallel, the outer shape of such substrate being in the form of an ellipse. In this approach, at least one of the two sets of walls running in parallel and crossing at about 90° to form the passages is inclined with respect to the axis of the major diameter of the ellipse. The other set is disposed either parallel to or inclined with respect to the minor diameter of the ellipse. DE—A—2809 749 discloses such a catalytic converter substrate.

Considerable substrate failures continue to exist, particularly when those catalytic substrates are optimized for other characteristics, such as weight, catalytic surface area, volume, etc. Accordingly, a need exists for a converter which contains an optimal substrate and is not prone to failure.

Accordingly, an object of the present invention is the provision of an improved catalytic converter contour exhibiting increased resistance to substrate failure while maintaining its catalytic properties.

According to the present invention there is provided a catalytic converter comprising: a container defining a substantially tubular inner surface of generally elliptical cross section, said container exhibiting anisotropic stiffness in response to pressures exerted on and normal to said surface: catalytic means of honeycomb structure having variable uniaxial crushing strength around and normal to the periphery of said catalytic means, including directions of lesser and of greater uniaxial crushing strength, said catalytic means substantially filling said container; resilient means surrounding said periphery for supporting said catalytic means in said container; and said inner surface, said periphery and said resilient means defining a container/catalytic means interface and being dimensioned to create interference fit within and around cross-sectional circumferences of said interface in substantially all directions normal to said circumferences, including directions of lesser uniaxial crushing strength, characterised in that said interference fit varies in a continuously gradual manner around said circumferences.

Thus, the present invention provides a novel catalytic converter comprising a container of anisotropic stiffness and a catalytic means comprising a substrate which are dimensioned such that the likelihood of fracture or disintegration of the catalytic substrate resulting from thermal or mechanical stresses is substantially diminished. In particular, the catalytic means, which substantially fills the container and defines a container/catalytic means interface with the inner surface of the container, is dimensioned with respect to that inner surface to create a fit of differential interferences around the cross-sectional circumference of said interface. In this manner, the compressive forces applied on the catalytic substrate at given points along its cross-sectional periphery are carefully controlled. These forces are selected to ensure that the substrate will be gripped firmly by the container but their magnitude will not exceed the effective uniaxial strength of the substrate at any point along its periphery. In particular, the differential interferences between the container and substrate are optimized by maximizing them in regions of least container stiffness and minimizing them in regions of greatest container stiffness. This construction produces pressures of desired magnitudes all around the periphery, minimizes the likelihood of substrate failure, and permits optimization of other substrate characteristics, such as, for example, cell wall size, thickness, geometric configuration and weight density.

Embodiments of the present invention will now be described by way of example, with reference to the accompanying drawings, in which:

Figure 1 is a diagrammatic cross-section of a prior art catalytic converter having a generally elliptical can surrounding a complementary configured substrate, sheathed by a conventional mesh;

Figure 2 is a chart showing a cross-section of one quadrant of the can illustrated in Figure 1, and the variation of the stiffness of the can in pounds per square inch per inch (1 psi/in=2.715 Bar/m) over an arc extending from 0° to 90°; note that the maximum resistance to deformation occurs at 45°;

Figure 3 is a graph representing the relative canning pressures exerted on, and stresses created within the converter illustrated in Figure 1, at various points within one quadrant of the cross-sectional periphery of the substrate illustrated in Figure 1;

Figure 4 is a graph illustrating the load/deformation behaviour of mesh, such as the mesh illustrated in Figure 1, showing the amount of deformation of mesh thickness in inches (1 inch=25.4 mm) along the x axis and the amount of load in pounds (1 lb=0.453 kg) applied to that mesh along the y axis; two distinct values of spring constants of the mesh in pounds/inch (1 lb/in=0.0178 kg/mm) being noted;

Figure 5 is a diagrammatic cross-section of one-half of a preferred embodiment can/substrate configuration, illustrating geometries relating to optimal can/substrate differential interferences;

Figure 6 is a diagrammatic cross-section of one quadrant of a portion of the preferred embodiment converter, shown in Figure 5, illustrating the location of mesh between the inner can surface and the substrate;

Figure 7 is a diagrammatic cross-section illustrating representative pressures applied to a catalytic substrate of the preferred embodiment catalytic converter shown in Figure 5.

As used throughout the present specification and claims, the term "anisotropic stiffness" refers to a structure such as the can or container of a catalytic converter and its deflection (bending deformation) characteristics, i.e., distance of flexure in response to a given pressure which varies depending upon the direction of force application and measurement; the term "uniaxial (crushing) strength" refers to the maximum force per unit area (compressive strengths) in a well-defined direction which can be withstood by a catalytic substrate at a given point along its surface without experiencing permanent deformation, as for example, through crushing or disintegration of that substrate at or in the region of the application of such force; the term "effective uniaxial crushing strength" means the actual uniaxial crushing strength which the catalytic means is capable of withstanding under actual conditions of pressure application, such as pressures experienced during the can closure process, and the term "isostatic strength" refers to the maximum value of uniform compressive stress all round the periphery which may be withstood by the cellular structure without experiencing permanent deformation. Such isostatic strengths are, of course, dependent upon, for example, the geometry of the cell structure, thickness and composition of the cell walls and temperature of the substrate.

The following description refers to a substrate having a honeycomb cross-section comprised of substantially square cells, and exhibiting varying uniaxial strengths depending upon the direction of application of compressive force with respect to the square cell orientation. However, as will be apparent to one of ordinary skill in this art, the teachings of the present invention may be utilized for substrates having different cross-sectional configurations, as for example, honeycombed cross-sections comprising hexagonal, triangular, diamond-shaped, trapezoidal and/or round geometries. In such instances, one of ordinary skill in the art will recognize, in view of the teachings contained herein, that the uniaxial strengths of these alternate configurations will differ depending upon the direction of applied force and the particular honeycomb geometry.

Unless otherwise indicated, the following description relates particularly to 400/6 "race track" substrates, i.e. substrates having 400 cells per square inch, each cell having a square geometry with a wall thickness of 0.006 inch (0.15 mm), and an outer contour resembling a "race track". This exemplary substrate has a cell wall spacing of 0.050 inch (1.25 mm), an open frontal area of 77%, a geometric surface area of 70 square inches per cubic inch (2.8 mm²/mm³), a thermal integrity factor of 8.33 and a mechanical integrity factor of 0.016. The thermal and mechanical integrity factors reflect

**0 040 980**

the ability of the substrate to withstand thermal and mechanical loads in service, and take into account the cell geometry and cell dimensions. Such factors may be used to compare one honeycomb structure versus another. This substrate may be compared with a standard square-cell 300/12 substrate, having 300 cells per square inch and a cell wall thickness of 0.012 inch (0.3 mm). Such a structure has a cell spacings of 0.058 inch (1.45 mm), an open frontal area of 63%, a geometric surface area of 55 square inches per cubic inch (2.2 $mm^2/mm^3$), a thermal integrity factor of 4.81 and mechanical integrity factor of 0.055. It may thus be seen that, under identical loading conditions, the 400/6 substrate has a 27% greater geometric surface area, will experience 40% lower thermal stress and 350% greater mechanical stress than the 300/12 substrate. Table 1 provides a comparison of ceramic substrates having various square cell structures:

TABLE 1
Properties of square cell substrates

| Cell count | Cell spacing | Open frontal area | Geometric surface area | Thermal integrity factor | Mechanical integrity factor | Weight density |
|---|---|---|---|---|---|---|
| (cells per in$^2$ (6.45 cm$^2$) and wall thickness in thousandths of an inch) | | | | | | (gms/cm$^3$) |
| 300/12 | 0.058 inch (1.45 mm) | 63% | 55 in$^2$/in$^3$ (2.2 mm$^2$/mm$^3$) | 4.81 | 0.055 | 0.63 |
| 200/10 | 0.070 inch (1.75 mm) | 73% | 49 in$^2$/in$^3$ (1.96 mm$^2$/mm$^3$) | 7.07 | 0.023 | 0.44 |
| 400/5.6 | 0.050 inch (1.25 mm) | 79% | 69 in$^2$/in$^3$ (2.76 mm$^2$/mm$^3$) | 7.72 | 0.017 | 0.36 |
| 400/6 | 0.050 inch (1.25 mm) | 77% | 70 in$^2$/in$^3$ (2.8 mm$^2$/mm$^3$) | 8.33 | 0.016 | 0.38 |
| 400/6.5 | 0.050 inch (1.25 mm) | 76% | 69.6 in$^2$/in$^3$ (2.78 mm$^2$/mm$^3$) | 7.69 | 0.019 | 0.41 |
| 500/5 | 0.045 inch (1.13 mm) | 79% | 76.9 in$^2$/in$^3$ (3.08 mm$^2$/mm$^3$) | 7.59 | 0.017 | 0.35 |
| 600/4 | 0.041 inch (1 mm) | 81% | 88 in$^2$/in$^3$ (3.52 mm$^2$/mm$^3$) | 10.21 | 0.011 | 0.32 |
| 600/6 | 0.041 inch (1 mm) | 73% | 84 in$^2$/in$^3$ (3.36 mm$^2$/mm$^3$) | 6.80 | 0.025 | 0.46 |

While 400/6 substrates are used herein for purposes of illustration, it is expected that more efficient substrates having higher cell counts, such as the 500/5, 600/4 and 600/6, will be preferred for most automotive applications.

An object of an embodiment of the present invention is the provision of a catalytic converter which permits the optimization of open frontal area, geometric surface area, weight density and thermal integrity factor by providing a catalytic converter assembly which enables the use of substrates having both relatively high and low mechanical integrity factors. Other Properties which may be optimized for such substrates include heat transfer, pressure drop, coatability, cell size versus gaseous diffusion, and the structural modulus characteristics. For these reasons, in addition to square cell substrates, triangular cell substrates are believed to be particularly useful as substrates in the hereinafter described catalytic converters.

An example of the usefulness of triangular cell substrates may be found in the catalytic converter for heavy-duty gasoline-powered truck engine. Unlike the automobile engine the requirements for the truck engine call for high mechanical and thermal integrity factors to withstand greater road abuse and higher engine temperatures respectively. Thus the choice of triangular cell structure, which is mechanically more rugged and isotropic than the square cell structure, is most appropriate for the truck application. Furthermore, the geometric surface area requirement is not as critical as for the automobile engine. Accordingly, a more open honeycomb structure with relatively heavier walled triangular cells is most desirable. Table 2 provides the properties of several ceramic substrates having various triangular cell structures which satisfy above requirements for truck applications.

TABLE 2
Properties of triangular cell substrates

| Cell count | Cell spacing | Open frontal area | Geometric surface area | Thermal integrity factor | Mechanical integrity factor | Weight density |
|---|---|---|---|---|---|---|
| (cells per in² (6.45 cm²) and wall thickness in thousandths of an inch) | | | | | | (gms/cm³) |
| 80/17.5 | 0.170 inch (4.32 mm) | 67% | 31.5 in²/in³ (1.26 mm²/mm³) | 6.8 | 0.03 | 0.55 |
| 100/15.5 | 0.152 inch (3.86 mm) | 67% | 35.1 in²/in³ (1.4 mm²/mm³) | 6.7 | 0.03 | 0.55 |
| 120/14 | 0.139 inch (3.53 mm) | 67% | 38.3 in²/in³ (1.53 mm²/mm³) | 6.6 | 0.03 | 0.55 |
| 140/12.8 | 0.128 inch (3.25 mm) | 67% | 41.2 in²/in³ (1.65 mm²/mm³) | 6.6 | 0.03 | 0.55 |
| 160/11.8 | 0.120 inch (3.05 mm) | 67% | 44.0 in²/in³ (1.76 mm²/mm³) | 6.6 | 0.03 | 0.55 |
| 180/11.2 | 0.113 inch (2.87 mm) | 67% | 46.3 in²/in³ (1.85 mm²/mm³) | 6.5 | 0.03 | 0.55 |
| 200/10.5 | 0.107 inch (2.72 mm) | 67% | 48.6 in²/in³ (1.94 mm²/mm³) | 6.4 | 0.03 | 0.55 |

The following description also refers to a generally tubular can or container of elliptical cross-section which is characterized by curved cylindrical portions imparting anisotropic stiffness to this container. One of ordinary skill in the art will recognize that the teachings of the present invention may be applied to curved portions which are not cylindrical sections, but rather may have other curvatures, such as parabolic, and which impart a different type of anisotropy to their associated containers. Similarly, while the following description refers to a representative mesh, it will be understood by those of ordinary skill in the art that the particular types of mesh utilized in the inventive catalytic converter may be altered without departing from the scope of the present invention, as described more particularly hereinafter.

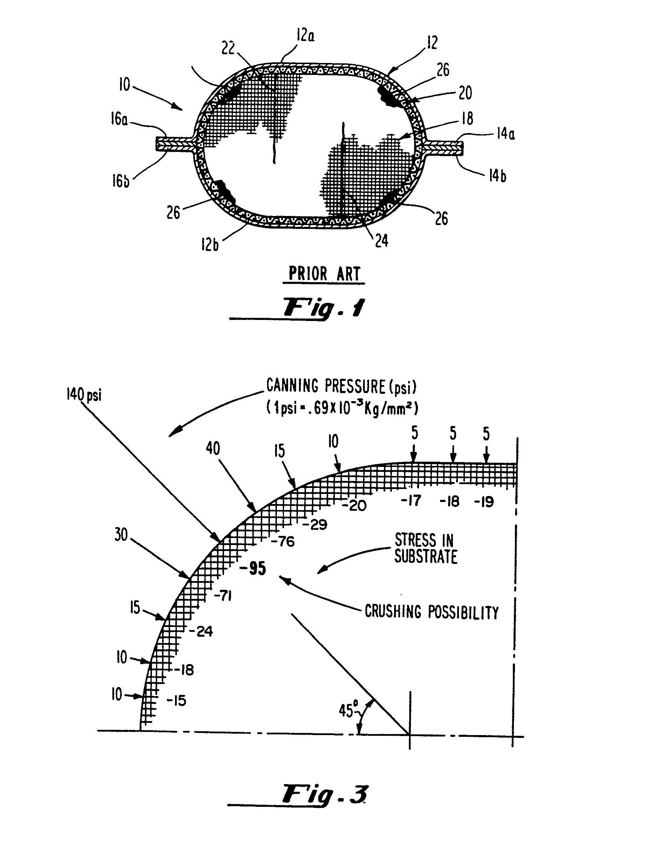

Referring now to the figures, Figure 1 discloses a diagrammatic cross-section of a prior art catalytic converter, designated generally 10, having a substantially elliptical can 12 which is formed from can halves 12a and 12b. These can halves are joined by welding or otherwise joining opposing flanges 14a and b, and 16a and b. Can 12 surrounds a catalytic substrate, designated generally 18, which has a honeycomb cross-section of substantially square cells, which are partially illustrated in the upper left and lower right quadrants of substrate 18. It will be noted from Figure 1 that the cross-sectional periphery of the catalytic substrate 18 parallels the inner surface of the can 12, and that a mesh 20 is disposed therebetween for supporting and reinforcing the catalytic substrate 18. During the canning process, that is, during the joining of can halves 12a and 12b, or thereafter during use, prior art substrates, such as catalytic substrate 18, are prone to failure. Such failures often take the form of fractures or fissures 22 and 24 and/or crushings or disintegrations, such as crushings 26. As shown in Figure 1, these failures are often located midway along the rounded portions of the can halves. In order to minimize the vibrations of catalytic substrate with respect to can 12, it is known in the art to dimension the periphery of the substrate 18, mesh 20, and inner can surface of can 12 such that an interference fit is created between these components. Because the mesh is compressable, the can and substrate are normally dimensioned so that an interference of several thousandths of an inch, for example, four thousandths of an inch (0.1 mm), will exist after the mesh is fully compressed between the substrate and inner surface of can. This interference fit, which is intended to be uniform around the entire cross-sectional periphery of the substrate, helps the substrate to withstand thermal and mechanical stresses which may be exerted thereon during operation. Unfortunately, in practice, a certain percentage of substrates which are assembled in the manner shown in Figure 1 develop failures, such as fractures 22 and 24 and crushings 26 shown in Figure 1, either during the "canning" process, or thereafter during use.

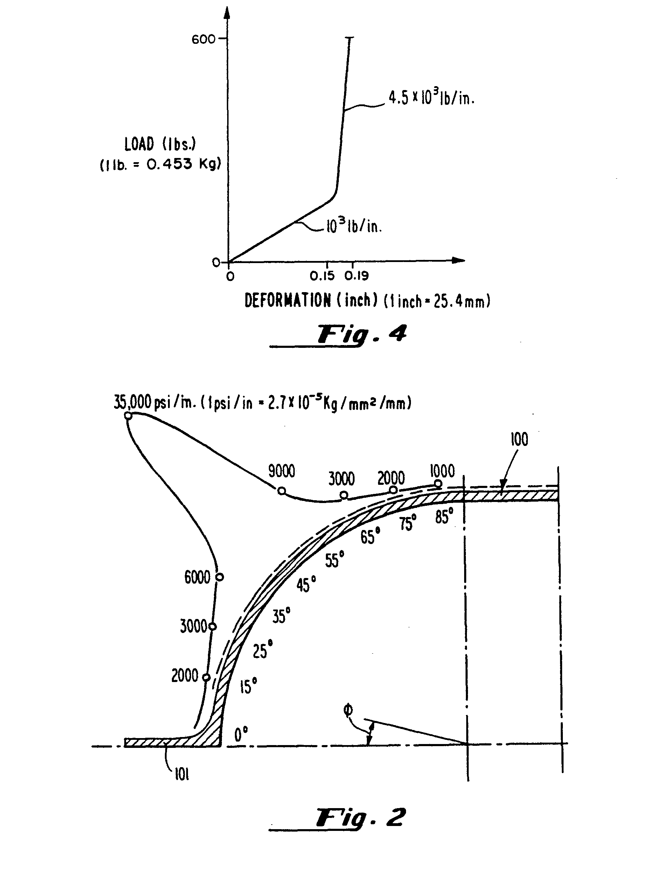

Applicants have recognised that in prior art converters, such as the converter illustrated in Figure 1, the pressure applied to the substrate during the canning process and thereafter is not uniform around the cross-sectional periphery of that substrate even though the desired uniform interference has been created during the canning procedure. Applicants have determined that in view of its high rigidity, the deformation capability of a typical ceramic substrate is small in comparison with that of the can under similar pressures. It has thus been recognised that creation of a given interference fit will require deformation of the container body by the interfering distance. Since such cans exhibit anisotropic stiffness, as seen in Figure 2, different pressures must be applied to different portions of the inner surface of the can to produce a given deformation. Conversely, once assembled in interfering relationship with the substrate, the can will apply a pressure on the substrate which varies around the substrate periphery. For an elliptical can such as illustrated in Figure 1, a minimum pressure will be exerted in areas adjacent to the planar portion of the can where the can stiffness is minimal, while a maximum pressure will be exerted at an angle of 45° with respect to the major axis of the can where the can stiffness is maximum. In Figure 3 the vectors of canning pressure for such a can-substrate configuration with an interference fit of four thousandths of an inch (0.1 mm) are illustrated by the vectors disposed outside the periphery of the substrate. In this figure, internal stress within the substrate due to varying canning pressure, as determined by the finite element method, at the points indicated, is represented by the negative numbers disposed on the interior of this periphery. From Figure 3, it will be seen that at or about 45° the canning pressure applied to the substrate (140 psi or 9.653 Bars) results in maximum stress within adjacent regions of the substrate whose magnitude may exceed the effective uniaxial crushing strength of the substrate along that axis, thereby creating the possibility of crushing or disintegration. Of course, one of ordinary skill in the art will recognize that the actual crushing strengths of a given substrate are dependent upon, for example, cell wall thickness, cell wall strength, cell density, cell geometry and cell orientation. It may not be assumed, however, that the problem of substrate failure can be solved simply by increasing the mechanical strength of the substrate. Increased resistance to mechanical stress may bring with it other disadvantageous characteristics, such as, for example, lowered resistance to thermal stress, higher weight and greater thermal inertia.

Applicants have recognized that substrate failures may be minimized by determining the anisotropic stiffness of a given can, determining the effective uniaxial crushing strengths of the substrate to be used with that can, and contouring that substrate so that preselected canning pressures develop during canning, which pressure should be no more than 3/4 and preferably approximately 1/2 to 1/3 the effective uniaxial crushing strength of the substrate.

Accordingly, a preferred catalytic converter of the present invention comprises a container, such as a container 100 in Figure 2, defining a substantially tubular inner surface of generally elliptical cross-section, which container exhibits anisotropic stiffness in response to pressure exerted within the planes of said cross-section; and a catalytic means substantially filling the container for catalytically oxidizing exhaust gases passing through the container, which catalytic means, together with the inner surface of the container, defines a container/catalytic means interface. In accordance with this preferred embodiment, the inner surface of the container and outer surface of the catalytic means are dimensioned to create a fit of differential interference around the cross-sectional circumference of said interface which results in canning pressures substantially below the effective uniaxial crushing strengths of the substrate.

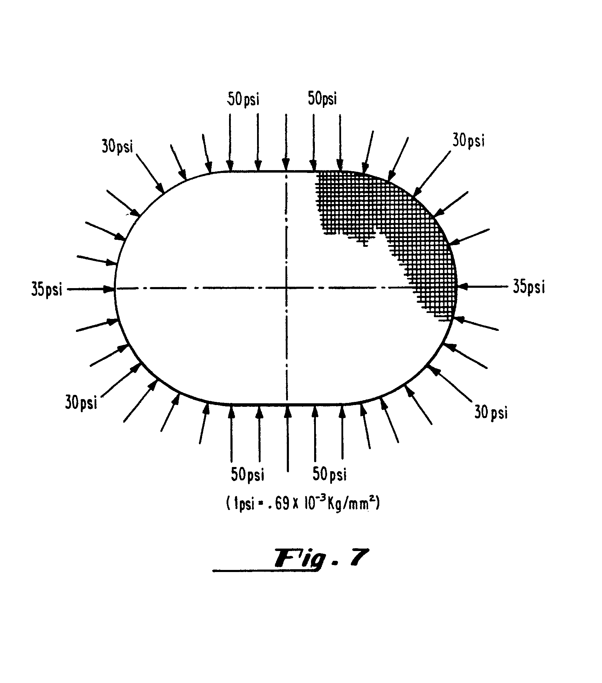

In accordance with a preferred embodiment of the present invention, the catalytic means comprises a square-cell catalytic substrate, such as substrate 200 (Figure 6) encased in metallic mesh, such as mesh 202 (Figure 6).

In Figure 4, the spring constant for a typical wire mesh, as actually determined by experimentation, is illustrated. For wire mesh having an initial thickness of 0.250 inch (6.3 mm), a deformation load of 600 pounds (272 Kg) over a 4.5 square inch (2900 mm$^2$) portion of wire mesh caused deformation of about 0.190 inch (4.8 mm) in thickness direction. As shown in Figure 4, the application of increasing loads did not produce substantial reductions in the thickness of the wire mesh, meaning that the solid thickness of wire mesh under load has been determined to be about 0.060 inch (1.5 mm) for this particular sample. Thus, by determining the solid thickness of any given wire mesh, it will be possible to determine whether a given catalytic substrate will produce an interference fit with its container. This is accomplished by determining whether the space between the catalytic substrate and the can interior is less than the determined solid thickness of the wire mesh. Thus, for the example given, a space between the inner can surface and substrate of less than 0.060 inch (1.5 mm) will produce an interference fit, the dimension of which may be determined by subtracting the substrate-container spacing from the solid dimension of the wire mesh.

With this method of contouring a catalytic substrate to a container, it is necessary to estimate the spring constant for a given can 12 at different locations along its inner surface. This may be accomplished using a Tinius Olsen machine to measure deflection in response to a given pressure, when the container configuration permits. Alternatively, the spring constant for the can may be estimated theoretically, using for example either the energy or finite element methods.

In Figure 2 a cross-section of a quadrant of the preferred container 100 (and flange 101) is shown. For arcs from 0° to 90°, theoretically determined spring constants in pounds per square inch per inch (1 psi/in=2.715 Bars/m) of deformation are charted. Thus, as shown in Figure 2, a force of 35 pounds per square inch (2.413 Bars) is needed to deform the can 0.001 inch (0.0025 mm) along the 45° axis. While this analysis is based on a simplified model of an actual can, it is believed to be representative of the amount of deformation pressure which must be applied to the can by the catalytic means in order to accommodate an interference fit of 0.001 inch (0.025 mm) and is predictive of canning pressures which will be exerted on substrates disposed in known interferences with this can.

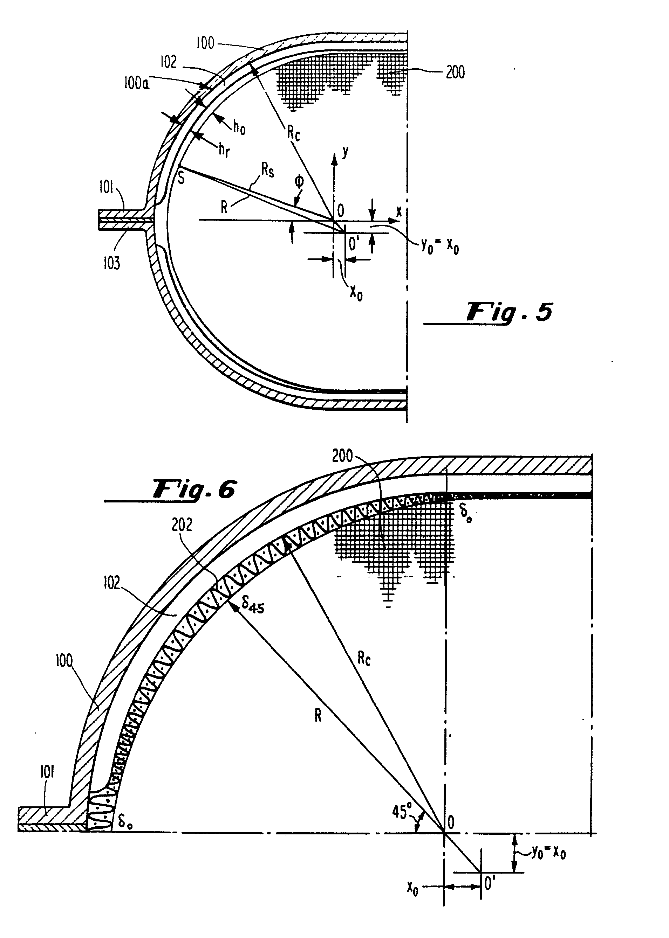

Referring now to Figure 5, in accordance with a method of producing a catalytic converter of the present invention, it is now possible to determine the preferred amount of differential interference to be established at the container catalytic means interface. In accordance with the preferred embodiment of the present invention, the inner surface 100a of a container 100 is seen to have an inwardly extending stiffener rib 102 disposed thereon. As used throughout the present specification and claims, it should be understood that in determining the degree of interference, the operative interior surface with respect to which such interferences are established is the innermost surface which in fact creates such interferences with the catalytic means. Thus, while the can illustrated in Figure 5 contains stiffener ribs 102, the interior surfaces of those ribs define the operative inner surfaces for determining interference between the container and the catalytic means.

For the preferred embodiment converter shown in Figure 5, the substrate contour has been redesigned to shift the maximum pressure out of the 45° position towards the 0° or 90° positions, which are relatively stronger substrate positions, i.e., positions in which canning forces will be applied along directions of relatively high uniaxial crushing strength. Accordingly, the interference in the 45° direction is reduced by displacing the centre of curvature of the substrate contour along the 45° direction to 0', generally away from the centre of the curvature of the can's (or can stiffener's) interior surface. In order to calculate the optimum coordinates of 0', $(x_o, -x_o)$, with respect to the coordinates (0,0) of the centre of curvature 0, of the interior can surface, let:

Rc = the radius of inner surface of the can with respect to origin 0;
$h_r$ = the depth of the stiffener rib;
$h_o$ = open space between stiffener and substrate;
$R_s$ = radial coordinate of substrate contour with respect to origin 0;
R = the radius of the substrate contour with respect to origin 0';
$h_b$ = the "bottomed out" (solid) thickness of wire mesh; and
$\phi$ = the angular position measured from the x axis.

It should be noted that both $h_o$ and $R_s$ vary with angular position $\phi$. The open space $h_o$ is occupied by wire mesh 202 whose "bottomed out" thickness is $h_b$, as shown more particularly in Figure 6. Since $h_b$ is greater $h_o$, it follows that the interference is given by

$$\delta c = h_b - h_o$$

where

$$h_o = R_c - h_r - R_s.$$

Thus $\delta c$ varies with $\phi$. $R_s(\phi)$ can be calculated by using the cosine rule for the triangle OSO';

$$R_s(\phi) = \sqrt{2}\, x_o \cos \theta + \sqrt{R^2 - 2x_o^2 \sin^2\theta}$$

in which $\theta$ is related to $\phi$ through

$$\theta = \phi + 135°$$

Physically, $\theta$ is the angle between the sides OS and OO' of the triangle OSO'. In order to compute $R_s$, values must be assigned to the two parameters R and $x_o$, which values influence the interference to be created between the substrate and can.

It is preferred to prescribe the interference desired at $\phi=0°$ (parallel to the cell walls) and $\phi=45°$ (the point of maximum can stiffness and greatest weakness of the illustrated square-cell substrate). Of course, in the selection of desired intereference by utilizing the can stiffness indicated in Figure 2, it is possible to select pressures, and thus interferences, which are commensurate with the effective uniaxial crushing strengths of the substrate. Due to the square cell orientation of the particular substrate illustrated in the figures, the uniaxial strength of the substrates in directions generally parallel to the cell walls will be substantially greater than in the 45° direction. Accordingly, for a square cell substrate it will be desirable to select substrate pressures along the 45° direction which are substantially lower than those parallel to the cell walls, that is, along 0° and 90° directions. Assuming that the given substrate may easily withstand crushing pressures of, for example, about 65 pounds per square inch (4.482 Bars) along 0° and 90° directions, and at 45° half of that amount, i.e., approximately 33 pounds per square inch (2.275 Bars), the interference $\delta_c$ can now be calculated, and will range from approximately 0.047 inch (1.2 mm) in the 0° to 0.001 inch (0.025 mm) in the 45° direction, to approximately 0.037 inch in the 90° direction, resulting in theoretical canning pressures of about 65 psi at the 0° position dropping to about 33 psi (2.275 Bars) at the 45° position and rising to approximately 45—50 psi (3.103—3.447 Bars) at the 90° position. The above estimates, however, assume that the inner surface of the stiffener is continuous right to the flange location. As shown in Figure 5, however, the stiffeners may terminate short of the can flanges (101 and 103), thus creating a relatively large space between substrate and the inner can surface. In this location, the interference with the can is simply the difference between the solid thickness of the wire mesh (in our example 0.060 inch (1.5 mm) and $h_o$. Due to the location of this spacing, quasi-uniform canning pressures of between about 30 and 50 psi (2.068 and 3.447 Bars) are obtained. Thus, as shown in Figure 7, while the magnitude of maximum pressure on the substrate has been reduced by more than 60%, the interference pressures between the can and substrate in areas of high can deformability have been substantially increased (in comparison with Figure 3). In this manner, though utilizing lower canning pressures than the peak values of prior art converters, converters exhibiting improved substrate gripping are provided.

In Figure 6, the differential interference distances between the can rib 102 and substrate periphery is clearly illustrated, as is the wire mesh 202 disposed therebetween. For the preferred embodiment, these interference distances range from about 0.047 inch (1.2 mm) at 90° to about 0.001 inch (0.025 mm) at 45°.

Thus, as seen from the above, the preferred substrate contour is optimized to a given geometry for given wire mesh and can characteristics. While in the given examples, the proposed contours involved single circular arcs, it should be noted that the point which is created at the juncture of the two arcs in adjacent quadrants should be smoothed out when fabricating the substrate for production. This smoothing operation will not alter the pressure distribution in view of the absence of can rib in the vicinity of the juncture. Similarly, by controlling the canning pressure distribution, it is now possible to maintain substantial margins of safety between the effective uniaxial strength of a given substrate along a given direction and the pressure which is applied to that substrate along that direction during canning. It is presently preferred that the pressure distribution be selected to provide a quasi-uniform pressure which is less than 3/4 and preferably 1/2 to 1/3 the effective uniaxial crushing strength of a given substrate, thereby providing a suitable safety margin. In this manner, crushing, shearing and bending-type failures during canning and subsequent use of a converter are minimized, while a uniform grip against road shocks, vibrations and other mechanical stresses is provided. Additionally, due to the optimization of canning pressures applied to the substrate, the isostatic strength of the substrate may be modified to create thinner, lighter, and a geometrically more desirable substrate.

## 0 040 980

As those of ordinary skill in the art will appreciate, converter containers, mesh and substrates are manufactured within given manufacturing tolerances, typically ±0.040 inch (1 mm) for the substrate, ±0.005 inch (0.125 mm) for the can and about ±0.050 inch (1.25 mm) for the mesh. As used herein the interferences referred to are controlled interferences which are intentionally created, as for example through specification of nominal dimensions, and are not uncontrolled interferences which might occasionally, inadvertently occur by reason of variations within specified manufacturing tolerance ranges.

### Claims

1. A catalytic converter comprising:
a container defining a substantially tubular inner surface of generally elliptical cross section, said container exhibiting anisotropic stiffness in response to pressures exerted on and normal to said surface; catalytic means of honeycomb structure having variable uniaxial crushing strength around and normal to the periphery of said catalytic means, including directions of lesser and of greater uniaxial crushing strength, said catalytic means substantially filling said container; resilient means surround said periphery for supporting said catalytic means in said container; and said inner surface, said periphery and said resilient means defining a container/catalytic means interface and being dimensioned to create interference fit within and around cross-sectional circumferences of said interface in substantially all directions normal to said circumferences, including directions of lesser uniaxial crushing strength, characterised in that said interference fit varies in a continuously gradual manner around said circumferences.

2. A converter of claim 1 wherein said catalytic means comprise a ceramic substrate.

3. A converter of claim 2, wherein said honeycomb structure comprises cells having sets of walls disposed along substantially transverse axes of said container.

4. A converter of claim 3 wherein said interference fit, in directions outwardly perpendicular to tangents of said inner surface, has a minimum value in the direction of maximum container stiffness and progressively increasing value as the direction parallel to either of said sets of walls is approached.

5. A converter of claim 3 or 4 wherein at least one of said sets of walls of said substrate is disposed substantially parallel to the minor axis of said elliptical cross-section of said container.

6. A converter of claim 3, 4 or 5 wherein said honeycomb structure defines a substantially square cell structure.

7. A converter of claim 6 wherein said substrate cells define an open frontal area of at least about 77%.

8. A converter of claim 6 or 7 wherein said substrate cells define a geometric surface area of at least about 70 square inches per cubic inch (2.8 mm²/mm³) of substrate.

9. A converter of claim 6, 7 or 8 wherein the weight density of said substrate is no greater than about 0.38 g/cm³.

10. A converter of any preceding claim wherein said substrate walls have a thickness no greater than 0.006 inch (0.15 mm).

11. A converter of any preceding claim, wherein said elliptical cross-section is defined by a plurality of substantially planar container walls joined by curved wall container portions.

12. A converter of claim 11 wherein the outer surface of said catalytic means comprises a plurality of substantially planar surfaces joined by curved surface portions.

13. A converter of claim 12 wherein the radii of curvature of said curved wall container portions are smaller than the complemental radii of curvature of interfacing curved catalytic means surface portions, whereby differential interference fit is created along the interface of said portions.

14. A converter of claim 12 or 13 wherein said curved wall container portion and said curved catalytic means surface portions are substantially circular curvatures, the radius of curvature of said catalytic means surface portion being substantially greater than the radius of curvature of its interfacing curved wall container portion.

15. A converter of any one of claims 11 to 14 wherein said catalytic means comprises a ceramic substrate of honeycomb cross-section, the cells of said honeycomb having walls oriented generally perpendicular to the said planar container walls.

16. A converter of any preceding claim wherein said catalytic means comprises a ceramic substrate of honeycomb cross-section, the cells of said honeycomb having walls oriented generally perpendicular to the said planar container walls.

17. A converter of any preceding claim wherein said resilient means comprises a wire mesh.

18. A converter of any one of claims 1 to 16 wherein said resilient means comprises a deformable ceramic mat.

19. A converter of any preceding claim wherein said resilient means has a substantially uniform fully compressed thickness.

20. A converter of any preceding claim wherein said interference fit effects canning pressures on and around said catalytic means by said container which are substantially below the effective uniaxial crushing strengths of said catalytic means.

11

21. A converter of claim 20 wherein said canning pressures are no more than 3/4 of the effective uniaxial crushing strength of said catalytic means.

22. A catalytic converter of claim 1 wherein the converter comprises a honeycomb structure having a plurality of axially extending cellular passages having a predetermined transverse cross-sectional configuration with a periphery including curved portions; a casing with curved wall portions surrounds said periphery of said structure, said periphery and said casing having initial variable distance therebetween before assembly with the resilient means therebetween which varies in a continuously gradual manner around said periphery and said casing, said distance being greater at and in a direction of lesser uniaxial crushing strength than at and in a direction of greater uniaxial crushing strength, and said resilient means comprising a resilient material of uniform fully compressed thickness between said periphery and said casing, which thickness is greater than the greater of said initial variable distance in a direction of lesser uniaxial crushing strength, whereby said interference fit of said structure within said casing is created in substantially all directions around and normal to said periphery and said casing, including the direction of lesser uniaxial crushing strength.

23. A converter of claim 22 wherein the radii of curvature of said curved wall portions of the casing are smaller than the complemental radii of curvature of opposed curved periphery portions of said structure.

24. A converter of claim 23 wherein said structure comprises a ceramic substrate.

## Patentansprüche

1. Katalytischer Umwandler, bestehend aus einem Behälter, der eine im wesentlichen rohrförmige Innenfläche mit in etwa elliptischem Querschnitt bildet, wobei der Behälter eine anisotrope Steifigkeit in Abhängigkeit von Drücken aufweist, die auf und senkrecht zu der Fläche ausgeübt werden; einer katalytischen Einrichtung mit einer Honigwabenstruktur, die eine variable einachsige Druckfestigkeit um und senkrecht zu dem Umfang der katalytischen Einrichtung, einschließlich Richtungen mit kleinerer und größerer einachsiger Druckfestigkeit, besitzt, wobei die katalytische Einrichtung den Behälter im wesentlichen ausfüllt; einer elastischen Einrichtung um den Umfang zum Halten der katalytischen Einrichtung in dem Behälter; und wobei die Innenfläche, der Umfang und die elastische Einrichtung eine Behälter/katalytische Einrichtung—Zwischenschicht bilden und so dimensioniert sind, daß sie einen Festsitz innerhalb und um die Querschnittsumfänge der Zwischenschicht herum in im wesentlichen allen Richtungen senkrecht uz den Umfangsflächen, einschließlich Richtungen mit geringerer einachsiger Druckfestigkeit, bilden, dadurch gekennzeichnet, daß der Festsitz ununterbrochen allmählich um die Umfänge herum variiert.

2. Umwandler nach Anspruch 1, dadurch gekennzeichnet, daß zu der katalytischen Einrichtung ein keramisches Substrat gehört.

3. Umwandler nach Anspruch 2, dadurch gekennzeichnet, daß zu der Honigwabenstruktur Zellen mit Wandgruppen gehören, welche im wesentlichen längs der Hauptsachsen des Behälters angeordnet sind.

4. Umwandler nach Anspruch 3, dadurch gekennzeichnet, daß der Festsitz in Richtungen außerhalb, senkrecht zu den Tangenten der Innenfläche eine minimale Größe in Richtung der maximalen Behältersteifigkeit und eine zunehmend ansteigende Größe bei Annäherung zu der Richtung parallel zu einer der Wandgruppen besitzt.

5. Umwandler nach Anspruch 3 oder 4, dadurch gekennzeichnet, daß wenigstens eine der Wandgruppen des besagten Substrates im wesentlichen parallel zu der kleineren Achse des elliptischen Querschnitts des Behälters angeordnet ist.

6. Umwandler nach Anspruch 3, 4 oder 5, dadurch gekennzeichnet, daß die Honigwabenstruktur eine im wesentlichen quadratische Zellenstruktur bildet.

7. Umwandler nach Anspruch 6, dadurch gekennzeichnet, daß die Substratzellen eine offene Vorderfläche von wenigstens etwa 77% bilden.

8. Umwandler nach Anspruch 6 oder 7, dadurch gekennzeichnet, daß die Substratzellen eine geometrische Oberflächenfläche von wenigstens etwa 70 square inches per cubic inch (2,8 mm²/mm³) des Substrats bilden.

9. Umwandler nach Anspruch 6, 7 oder 8, dadurch gekennzeichnet, daß das spezifische Gewicht des Substrats nicht mehr als etwa 0,38 g/cm³ ist.

10. Umwandler nach einem der vorangehenden Ansprüche, dadurch gekennzeichnet, daß die Substratwandungen eine Dicke von nicht mehr als 0,006 inch (0,15 mm) besitzen.

11. Umwandler nach einem vorangehenden Anspruch, dadurch gekennzeichnet, daß der elliptische Querschnitt von einer Vielzahl von im wesentlichen ebenen Behälterwandungen gebildet ist, die durch gekrümmte Behälterwandabschnitte miteinander verbunden sind.

12. Umwandler nach Anspruch 11, dadurch gekennzeichnet, daß die Außenfläche der katalytischen Einrichtung eine Vielzahl von im wesentlichen ebenen Flächen aufweist, die durch gekrümmte Flächenabschnitte miteinander verbunden sind.

13. Umwandler nach Anspruch 12, dadurch gekennzeichnet, daß die Krümmungsradien der gekrümmten Behälterwandabschnitte kleiner als die komplementären Krümmungsradien der dazwischenliegenden gekrümmten Oberflächenabschnitte der katalytischen Einrichtung sind, wodurch längs der Zwischenschicht der Abschnitte ein Differenzialfestsitz erzeugt wird.

14. Umwandler nach Anspruch 12 oder 13, dadurch gekennzeichnet, daß der gekrümmte Behälterwandabschnitt und die gekrümmten Oberflächenabschnitte der katalytischen Einrichtung im wesentlichen kreisförmige Krümmungen sind, wobei der Krümmungsradius des Oberflächenabschnitts der katalytischen Einrichtung im wesentlichen größer als der Krümmungsradius seines dazwischen liegenden gekrümmten Behälterwandabschnittes ist.

15. Umwandler nach einem der Ansprüche 11 bis 14, dadurch gekennzeichnet, daß zu der katalytischen Einrichtung ein keramisches Substrat mit Honigwabenquerschnitt gehört, wobei die Zellen der Honigwabe Wandungen aufweisen, die im wesentlichen senkrecht zu den besagten ebenen Behälterwandungen ausgerichtet sind.

16. Umwandler nach einem vorangehenden Anspruch, dadurch gekennzeichnet, daß zu der katalytischen Einrichtung ein keramisches Substrat mit Honigwabenquerschnitt gehört, wobei die Zellen der Honigwabe Wandungen aufweisen, die im wesentlichen senkrecht zu den besagten Ebenenbehälterwandungen ausgerichtet sind.

17. Umwandler nach einem vorangehenden Anspruch, dadurch gekennzeichnet, daß zu der elastischen Einrichtung ein Drahtgeflecht gehört.

18. Umwandler nach einem der Ansprüche 1 bis 16, dadurch gekennzeichnet, daß zu der elastischen Einrichtung eine deformierbare keramische Matte gehört.

19. Umwandler nach einem vorangehenden Anspruch, dadurch gekennzeichnet, daß die elastische Einrichtung eine im wesentlichen gleichförmige vollständig zusammengedrückte Dicke besitzt.

20. Umwandler nach einem vorangehenden Anspruch, dadurch gekennzeichnet, daß der Festsitz auf und um die katalytische Einrichtung herum durch den Behälter Umhüllungsdrücke ausübt, die im wesentlichen unterhalb der effektiven einachsigen Druckfestigkeit der katalytischen Einrichtung liegen.

21. Umwandler nach Anspruch 20, dadurch gekennzeichnet, daß die Umhüllungsdrücke nicht mehr als 3/4 der effektiven einachsigen Durckfestigkeit der katalytischen Einrichtung betragen.

22. Umwandler nach Anspruch 1, dadurch gekennzeichnet, daß der Umwandler sich zusammensetzt aus einer Honigwabenstruktur mit zahlreichen sich axial erstreckenden zellenförmigen Kanälen, die eine vorbestimmte Querschnittskonfiguration mit einem gekrümmten Abschnitte enthaltenden Umfang; ein Gehäuse mit gekrümmten Wandabschnitten, das den Umfang der Struktur umgibt, wobei der Umfang und das Gehäuse vor dem Zusammenbau mit der elastischen Einrichtung dazwischen einen ursprünglich variablen Abstand aufweisen, der ununterbrochen allmählich um den Umfang und das besagte Gehäuse variiert, wobei der Abstand an und in einer Richtung geringerer einachsiger Druckfestigkeit größer ist als an und in einer Richtung größerer einachsiger Druckfestigkeit, und wobei zu der elastischen Einrichtung ein elastisches Material mit gleichmäßig vollständig zusammengedrückter Dicke zwischen dem Umfang und dem Gehäuse gehört, wobei die Dicke größer ist als der größere des ursprünglich variablen Abstands in einer Richtung geringerer einachsiger Druckfestigkeit, wodurch der Festsitz der Struktur innerhalb des Gehäuses in im wesentlichen allen Richtungen um und senkrecht zu dem Umfang und dem Gehäuse, einschließlich der Richtung geringerer einachsiger Druckfestigkeit, erzeugt wird.

23. Umwandler nach Anspruch 22, dadurch gekennzeichnet, daß die Krümmungsradien der gekrümmten Wandabschnitte des Gehäuses kleiner als die komplementären Krümmungsradien der gegenüberliegenden gekrümmten Umfangsabschnitte der Struktur sind.

24. Umwandler nach Anspruch 23, dadurch gekennzeichnet, daß zu der Struktur ein keramisches Substrat gehört.


**Revendications**

1. Convertisseur catalytique comprenant:
Un boîtier définissant une paroi sensiblement tubulaire à section plus ou moins elliptique et présentant une raideur anisotrope en réponse à des pressions exercées sur ladite surface et normalement à celle-ci; un moyen catalytique à structure en nid d'abeilles présentant une résistance à l'écrasement uniaxe variable autour de la périphérie dudit moyen catalytique et normalement à celle-ci, comportant des directions de moindre et de plus grande résistance à l'écrasement uniaxe, ledit moyen catalytique remplissant sensiblement ledit boîtier; un moyen élastique entourant ladite périphérie afin de supporter ledit moyen catalytique dans ledit boîtier; et ladite surface interne, ladite périphérie et ledit moyen élastique définissant une interface boîtier/moyen catalytique et étant dimensionnés de façon à créer un ajustement à serrage à l'intérieur et autour de circonférences de section de ladite interface sensiblement dans toutes les directions normales auxdites circonférences, y compris dans des directions de moindre résistance à l'écrasement uniaxe, caractérisé en ce que ledit ajustement à serrage varie selon une gradation continue autour desdites circonférences.

2. Convertisseur selon la revendication 1, dans lequel ledit moyen catalytique comprend un substrat en céramique.

3. Convertisseur selon la revendication 2, dans lequel ladite structure en nid d'abeilles comprend des cellules comportant des jeux de parois le long d'axes sensiblement transversaux dudit boîtier.

4. Convertisseur selon la revendication 3, dans lequel ledit ajustement à serrage, dans des directions perpendiculaires vers l'extérieur à des tangentes de ladite surface interne, présente une valeur minimum dans la direction de raideur de boîtier maximum et une valeur progressivement croissante au fur et à mesure qu'on s'approche de la direction parallèle à l'un ou l'autre desdits jeux de parois.

5. Convertisseur selon la revendication 3 ou 4, dans lequel l'un au moins desdits jeux de parois dudit substrat est disposé sensiblement parallèlement au petit axe de ladite section elliptique dudit boîtier.

6. Convertisseur selon la revendication 3, 4 ou 5, dans lequel ladite structure en nid d'abeilles définit une structure à cellules sensiblement carrées.

7. Convertisseur selon la revendication 6, dans lequel lesdites cellules de substrat définissent une surface frontale ouverte d'au moins environ 77%.

8. Convertisseur selon la revendication 6 ou 7, dans lequel lesdites cellules de substrat définissent une surface géométrique d'au moins environ 70 pouces carrés par pouce cube (2,8 mm$^2$/mm$^3$) de substrat.

9. Convertisseur selon la revendication 6, 7 ou 8, dans lequel la masse volumique dudit substrat n'est pas supérieure à environ 0,38 g/cm$^3$.

10. Convertisseur selon l'une quelconque des revendications précédentes, dans lequel lesdites parois de substrat ont une épaisseur ne dépassant pas 0,006 pouce (0,15 mm).

11. Convertisseur selon l'une quelconque des revendications précédentes, dans lequel ladite section elliptique est définie par une multiplicité de parois de boîtier sensiblement planes réunies par des portions de boîtier à parois incurvées.

12. Convertisseur selon la revendication 11, dans lequel la surface externe dudit moyen catalytique comprend une multiplicité de surfaces sensiblement planes réunies par des portions de surfaces incurvées.

13. Convertisseur selon la revendication 12, dans lequel les rayons de courbure desdites portions de boîtier à parois incurvées sont plus petits que les rayons de courbure complémentaires de portions de surface de moyen catalytique incurvées d'interfaces, en créant ainsi un ajustement à serrage différentiel le long de l'interface desdites portions.

14. Convertisseur selon la revendication 12 ou 13, dans lequel ladite portion de boîtier à paroi incurvée et lesdites portions de surface de moyen catalytique incurvées ont des courbures sensiblement circulaires, le rayon de courbure de ladite portion de surface de moyen catalytique étant sensiblement plus grand que le rayon de courbure de sa portion de boîtier à paroi incurvée d'interface.

15. Convertisseur selon l'une quelconque des revendications 11 à 14, dans lequel ledit moyen catalytique comprend un substrat en céramique à section en nid d'abeilles, les cellules dudit nid d'abeilles comportant des parois orientées plus ou moins perpendiculairement auxdites parois de boîtier planes.

16. Convertisseur selon l'une quelconque des revendications précédentes, dans lequel ledit moyen catalytique comprend un substrat en céramique à section en nid d'abeilles, les cellules dudit nid d'abeilles présentant des parois orientées plus ou moins perpendiculairement auxdites parois de boîtier planes.

17. Convertisseur selon l'une quelconque des revendications précédentes, dans lequel ledit moyen élastique comprend un treillis métallique.

18. Convertisseur selon l'une quelconque des revendications 1 à 16, dans lequel ledit moyen élastique comprend un mât en céramique déformable.

19. Convertisseur selon l'une quelconque des revendications précédentes, dans lequel ledit moyen élastique présente une épaisseur de compression complète sensiblement uniforme.

20. Convertisseur selon l'une quelconque des revendications précédentes, dans lequel ledit ajustement à serrage exerce des pressions d'encapsulage sur et autour dudit moyen catalytique par ledit boîtier qui sont sensiblement inférieures aux résistances à l'écrasement uniaxes effectives dudit moyen catalytique.

21. Convertisseur selon la revendication 20, dans lequel lesdites pressions d'encapsulage ne dépassent pas les 3/4 de la résistance à l'écrasement uniaxe effective dudit moyen catalytique.

22. Convertisseur catalytique selon la revendication 1, dans lequel le convertisseur comprend une structure en nid d'abeilles présentant une multiplicité de passages cellulaires axiaux ayant une configuration de section transversale prédéterminée avec une périphérie comportant des portions incurvées; une enveloppe à portions de paroi incurvées entoure ladite périphérie de ladite structure, ladite périphérie et ladite enveloppe étant mutuellement situées à une distance initiale variable avant assemblage avec le moyen élastique les séparant qui varie selon une gradation continue autour de ladite périphérie et de ladite enveloppe, ladite distance étant plus grande dans une direction de moindre résistance à l'écrasement uniaxe que dans une direction de plus grande résistance à l'écrasement uniaxe, et ledit moyen élastique comprenant un matériau élastique à épaisseur de compression complète uniforme entre ladite périphérie et ladite enveloppe, laquelle épaisseur est plus grande que la plus grande distance initiale variable dans une direction de moindre résistance à l'écrasement uniaxe, de sorte que ledit ajustement à serrage de ladite structure à l'intérieur de ladite enveloppe se trouve créé sensiblement dans toutes les directions autour de ladite périphérie et de ladite enveloppe et normalement à elles, y compris dans la direction de moindre résistance à l'écrasement uniaxe.

23. Convertisseur selon la revendication 22, dans lequel les rayons de courbure desdites portions de parois incurvées de ladite enveloppe sont plus petits que les rayons de courbure complémentaires de portions de périphérie incurvées opposées de ladite structure.

24. Convertisseur selon la revendication 23, dans lequel ladite structure comprend un substrat en céramique.

PRIOR ART

*Fig. 1*

CANNING PRESSURE (psi)
($1\,psi = .69 \times 10^{-3}\,Kg/mm^2$)

*Fig. 3*

LOAD (lbs.)
(1 lb. = 0.453 Kg)

$4.5 \times 10^3$ lb/in.

$10^3$ lb/in.

DEFORMATION (inch) (1 inch = 25.4mm)

**Fig. 4**

35,000 psi/in. (1 psi/in = $2.7 \times 10^{-5}$ Kg/mm²/mm)

**Fig. 2**

_Fig . 5_

_Fig. 6_

50 psi  50 psi
30 psi  30 psi
35 psi  35 psi
30 psi  30 psi
50 psi  50 psi

( 1psi = .69 x 10$^{-3}$ Kg/mm² )

*Fig. 7*